# EUROPÄISCHE PATENTSCHRIFT

(11) **EP 2 849 201 B1**
(45) Veröffentlichungstag und Bekanntmachung des Hinweises auf die Patenterteilung: **13.04.2016**
(21) Anmeldenummer: 14000342.7
(22) Anmeldetag: 30.01.2014
(51) Int. Cl.: H01H 85/20

(54) **Sicherheitstrennschalter mit einem Montagemodul**
Safety circuit breaker with a mounting module
Disjoncteur de sécurité doté d'un module de montage

(30) Priorität: 11.09.2013 PL 40531413
(43) Veröffentlichungstag der Anmeldung: 18.03.2015
(73) Patentinhaber: APATOR S.A., 87-100 Torun (PL)
(72) Erfinder: Baran, Marcin, 95-080 Tuszyn (PL); Luczak, Robert, 87-800 Wloclawek (PL); Geberle, Damian, 87-100 Torun (PL); Latka, Tomasz, 87-220 Radzyn Chelminski (PL)
(74) Vertreter: Bischof, Oliver

(56) Entgegenhaltungen:
- DE-A1- 1 935 717
- DE-A1- 3 400 805
- DE-B3-102004 017 393

## Beschreibung

Die Erfindung betrifft einen Sicherheitstrennschalter mit einer Basis mit wenigstens einer darin angeordneten unteren Anschlussschiene, sowie einem Montagemodul mit eingesetzter Schraube.

Bekannt sind Trennschalter mit Anschlusssitzen, in die manuell Schrauben eingesetzt werden, die zum Befestigen des Trennschalters an einer Schienenbrücke ohne Hilfe von zusätzlichen stabilisierend haltenden Elementen dienen. Bekannt ist auch ein Befestigungselement für Niedervolt-Hochleistungssicherungsleisten (DE 10 2004 017 393 B3), bei dem zum Anschluss an Sammelschienen Anschlusswinkel vorgesehen sind, die den oben genannten Anschlussschienen entsprechen. Darüber hinaus wird ein Isolationskörper vorgesehen, in dem eine Schraube eingesetzt ist, die innerhalb des Isolationskörpers zwar verdrehbar, aber nicht herausnehmbar gehalten ist. Der Isolationskörper ist im Wesentlichen aus einer Hülse gebildet und mit Hilfe eines Federrings gegen eine Abdeckplatte gedrückt. Nachvollziehbar ist, dass der Zusammenbau relativ kompliziert ist und ein Auswechseln der Schraube nicht einfach zu bewerkstelligen ist.

Es stellt sich demnach die Aufgabe, das Befestigungssystem mit einem Montagemodul zu verbessern, der schnell zu montieren ist, spielfrei die Schrauben hält und einfach auszuwechseln ist.

Diese Aufgabe wird gelöst bei einem Sicherheitstrennschalter der eingangs genannten Art, bei dem der Montagemodul eine formschlüssig in die Basis eingesetzte Platte umfasst und bei dem die Schraube in einer unterhalb der Platte angesetzten Hülse ausgerichtet gehalten ist. Weitere Einzelheiten der Unteransprüche ergeben sich aus der nachfolgenden Beschreibung. Die Beschreibung erfolgt anhand einer Zeichnung, die folgende Figuren umfasst:
Fig. 1 Einen Sicherheitstrennschalter gemäß Erfindung in einer perspektivischen Ansicht;
Fig. 2 das Unterteil des Trennschalters mit Basis, in einer perspektivischen Ansicht von vorn;
Fig. 3 das Unterteil gemäß Figur 2 in einer perspektivischen Ansicht von untern;
Fig. 4 die Basis des Unterteils in einer perspektivischen Draufsicht von der Anschlussseite her gesehen;
Fig. 5 die Basis in einer perspektivischen Draufsicht gemäß Figur 4, von der entgegengesetzten Seite her gesehen;
Fig. 6 ein Montagemodul in einer perspektivischen Ansicht;
Fig. 7 Gehäuse eines Montagemoduls in einer perspektivischen Ansicht;
Fig. 8 Gehäuse des Montagemoduls, um 180° gedreht, in einer perspektivischen Ansicht;
Fig. 9 Kontaktabschirmung in perspektivischer Ansicht.

### Figurenbeschreibung

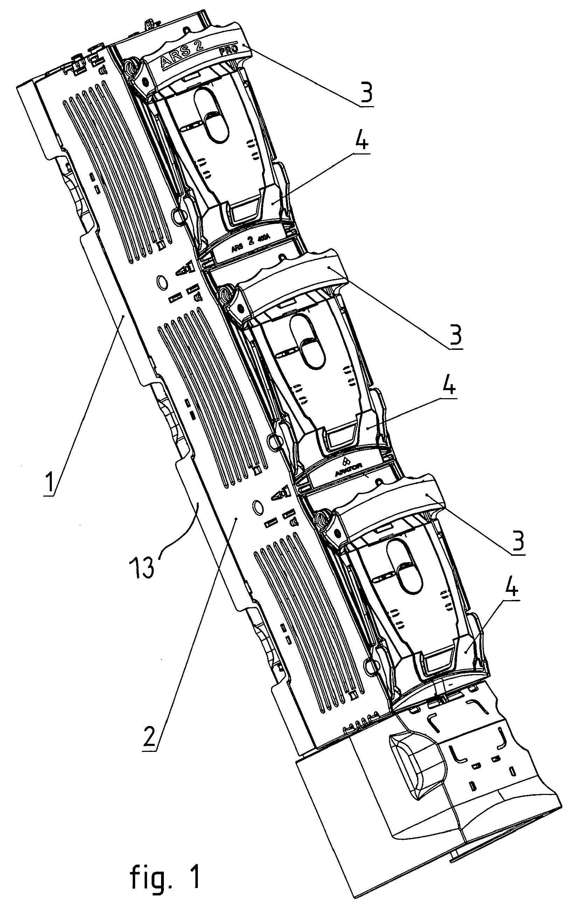

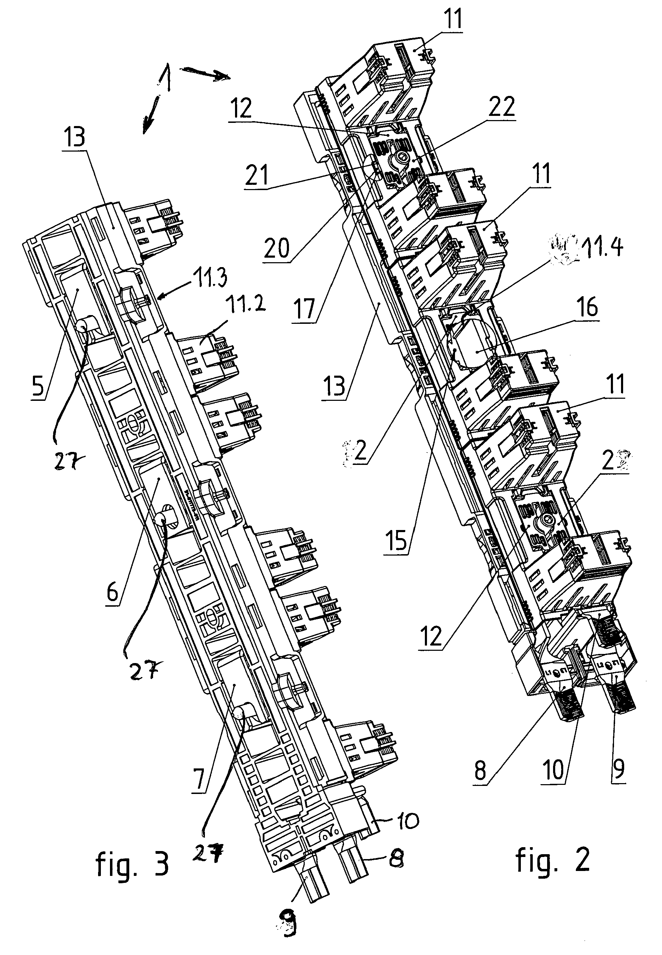

Das in Figur 1 gewählte Ausführungsbeispiel eines Isolations-Sicherheitstrennschalters 100 gemäß Erfindung, der beispielsweise an einer Sammelschiene (hier nicht dargestellt) zu befestigen ist, umfasst ein Unterteil 1, ein Gehäuse 2, Bedienungshandgriffe 3 und einen Deckel 4. Nach Abnahme des Deckels 4 wird das Unterteil 1 freigelegt, so dass sich eine Ansicht gemäß den Figuren 2 und 3 ergibt.

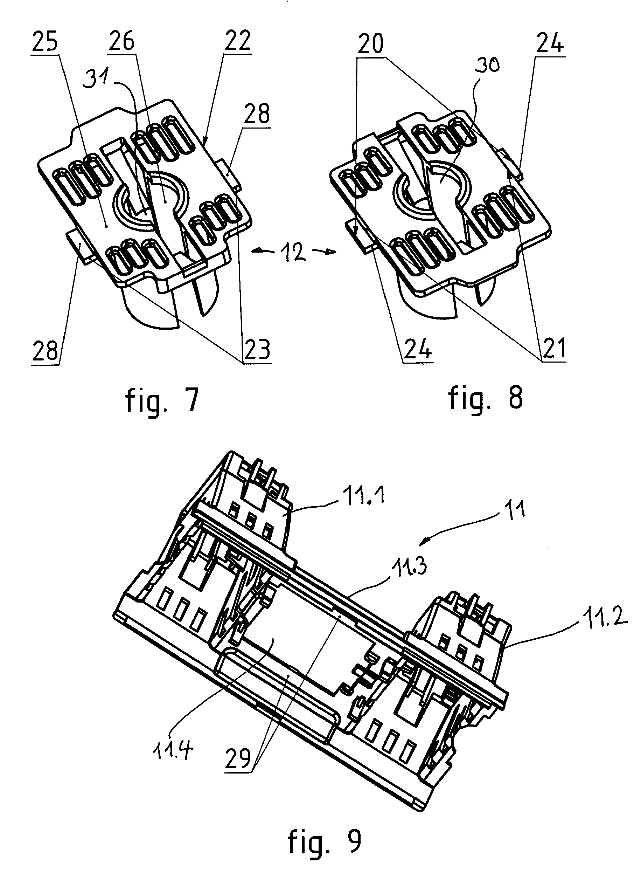

Das Unterteil 1 umfasst eine Basis 13 mit einer aus Figur 3 ersichtlichen Unterseite, an der Anschlussschienen 5, 6 und 7 als Kontaktschienen L1, L2, L3 offen liegen, die sich entlang der Achsenerstreckung 14 des Unterteils 1 fortsetzen und in Abflussschienen 8, 9, 10 enden und dort entsprechend als L1, L2, L3-Abflussschienen bezeichnet werden. Aus der Unterseite ragen außerdem die Enden von Verbindungsschrauben 27 heraus, die ebenfalls Teil der Kontakte bzw. Befestigung zur Sammelschiene (nicht dargestellt) sind. Die Kontaktbereiche sind mit Kontaktschirmungen 11 überbrückt, die jeweils aus zwei turmartigen Erhöhungen 11.1 und 11.2 bestehen, zwischen denen eine Brücke 11.3 besteht, die eine Mittelöffnung 11.4 aufweist (vgl. Figur 9).

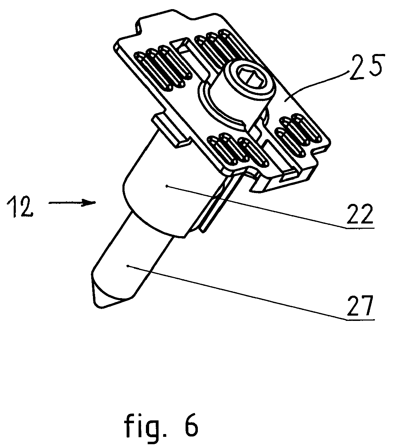

Die Brücke 11.3 trägt ein Montagemodul 12, das in die Mittelöffnung 11.1 eingesetzt ist. Das Montagemodul weist ein Gehäuse 22 auf, das sich aus den Figuren 6, 7 und 8 ergibt. An eine perforierte, vorzugsweise aus nicht-leitendem Material bestehende Platte 25 in Rechteckform schließt sich eine zweiteilige Hülse 26 einstückig an, sodass eine Verbindung zwischen den beiden Teilen 25 und 26 besteht. Durch die Platte 25 und Hülse 26 ist ein Durchgang geschaffen. Von der Oberseite der Platte 25 aus ist das Innere der Hülse 26 durch eine Öffnung 30 zugänglich. Es ergibt sich damit ein von der Hülse umschlossener Kanal 31 für die Schraube 27 (vgl. Figur 6).

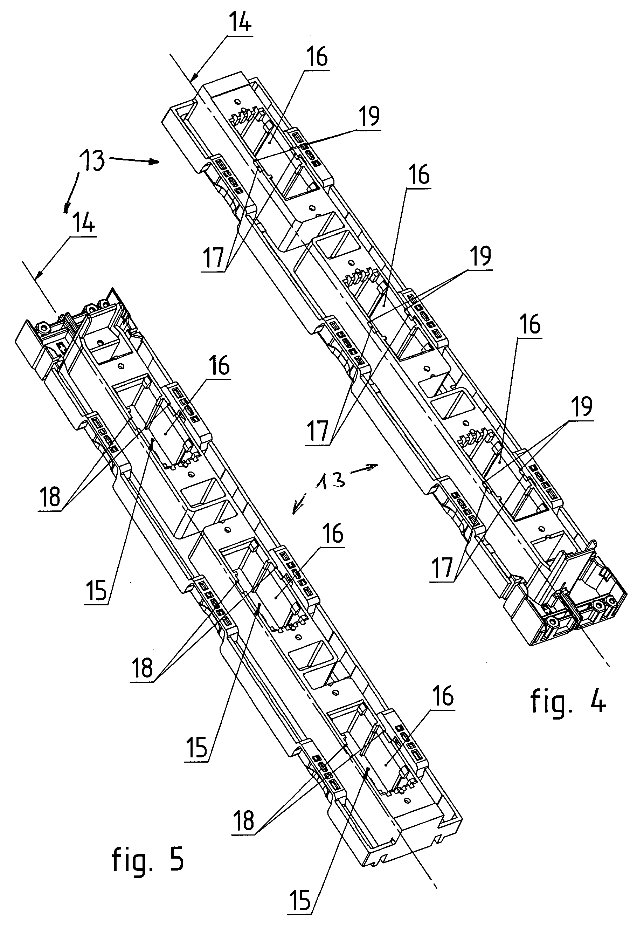

In der Basis 13, entlang der Längsachse 14 (vgl. Figuren 4 und 5), sind vertiefte Anschlusssitze 15 unterhalb der Brücke 11.3 vorgesehen, die an zwei gegenüberliegenden Seiten von Seitenwänden 16 eingefasst sind. An der Oberkante der Seitenwände 16 befinden sich Ausschnitte 17, die in Form eines quaderfarbigen Hohlraums eine erste Anschlagstirnseite 18 und eine zweite Anschlagstirnseite 19 besitzen.

In die Ausschnitte 17 werden flügelartige Zungen 20 eingedrückt (vergl. Fig. 8), die aus der Platte 25 des Montagemoduls 12 an den Seitenflächen 21 herausragen. Die Zungen 28 sind seitlich mit vorzugsweise senkrecht zur Oberfläche der Platte 25 ausgerichteten Anschlagflächen 23 und 24 begrenzt, die eine Anschlagfläche gegen die Anschlagstirnseiten 18 und 19 ergeben und nur ein praktisch vernachlässigbares Spiel des Montagemoduls 12 gegenüber der Basis 13 übrig lassen.

Wird der Trennschalter 100 über die Schraube 27 dann auf dem entsprechenden Element befestigt, so ergibt sich eine genaue Position vor und nach der Montage des Montagemoduls 12, da auch der Hülsenkanal 31 zusammengedrückt wird und die Schraube 27 fixiert. Die Schraube 27 ist üblicherweise in einer Einschrauböffnung einer Sammelschiene der Schienenbrücke eingeschraubt. Der befestigte Trennschalter 100 ist dank des geringen Spies des Montagemoduls 12, das sich aus der Lage des Montagemoduls in den Ausschnitten 17 der Basis 13 ergibt, praktisch spielfrei eingepasst. Diese Einpassung besteht auch für die im Gehäuse 22 des Montagemoduls 12 fixierten Schraube 27, die sich in einer vorgesehenen Öffnung in der Sammelschiene der Schienenbrücke befindet.

Insgesamt wird das Spiel, wie beschrieben, begrenzt, um auch zu verhindern, dass der Montagemodul 12 aus dem Anschlusssitz 15 der Basis 13 herausfällt. Die Oberseite der Zungen 20 werden durch die nach unten zeigenden Einkerbungen 29 in der Brücke 11.3 abgedeckt und formschlüssig gehalten, da die Oberseite 18 der Zungen 20 gegen die Unterseite der Einkerbungen 29 drückt.

## Patentansprüche

1. Sicherheitstrennschalter mit einer Basis (13) mit wenigstens einer darin angeordneten unteren Anschlussschiene (7), sowie einem Montagemodul mit einer eingesetzten Schraube (27), **dadurch gekennzeichnet, dass** der Montagemodul (12) eine formschlüssig in die Basis (13) eingesetzte Platte (25) besitzt und dass die Schraube (27) in einer unterhalb der Platte (25) angesetzten Hülse (26) ausgerichtet gehalten ist.

2. Sicherheitstrennschalter nach Anspruch 1, **dadurch gekennzeichnet, dass** Hülse (26) und Platte (25) einstückig sind.

3. Sicherheitstrennschalter nach Anspruch 1, **dadurch gekennzeichnet, dass** die Basis (13) im Bereich der eingesetzten Platte (25) wenigstens einen Ausschnitt (17) besitzt, in dem wenigstens eine aus der Platte (25) seitlich herausragende Zunge (20) aufgenommen ist.

## Claims

1. Safety circuit breaker comprising a base (13) having at least one lower connection strip (7) arranged therein, and comprising a mounting module with an inserted screw (27), **characterised in that** the mounting module (12) comprises a plate (25) which is inserted in a form-fitting manner into the base (13) and **in that** the screw (27) is held in an oriented manner in a sleeve (26) attached below the plate (25).

2. Safety circuit breaker as claimed in claim 1, **characterised in that** the sleeve (26) and plate (25) are formed in one piece.

3. Safety circuit breaker as claimed in claim 1, **characterised in that** the base (13) comprises in the region of the inserted plate (25) at least one cut-out (17) which receives at least one tongue (20) which protrudes laterally from the plate (25).

## Revendications

1. Disjoncteur de sécurité comprenant, premièrement, une base (13) dans laquelle est agencée au moins une barre de connexion (7) inférieure et, deuxièmement, un module de montage (12) et une vis (27) insérée dans ce dernier, **caractérisé en ce que** le module de montage (12) est doté d'une platine (25) qui s'introduit dans la base (13) par coopération de forme et **en ce que** la vis (27) est maintenue alignée dans une douille (26) rapportée en-dessous de la platine (25).

2. Disjoncteur de sécurité selon la revendication 1, **caractérisé en ce que** la douille (26) et la platine (25) sont réalisées d'un seul tenant.

3. Disjoncteur de sécurité selon la revendication 1, **caractérisé en ce que** la base (13) possède, au niveau de la platine (25) insérée, au moins une encoche dans laquelle est logée au moins une languette (20) dépassant latéralement de ladite platine (25).
